Europäisches Patentamt

(19) European Patent Office

Office européen des brevets

(11) Numéro de publication: **0 134 178**
**B1**

(12) **FASCICULE DE BREVET EUROPÉEN**

(45) Date de publication du fascicule du brevet:
13.01.88

(21) Numéro de dépôt: **84401706.1**

(22) Date de dépôt: **22.08.84**

(51) Int. Cl.⁴: **C 08 K 5/07,** C 09 D 3/80

(54) Composition et procédé pour le revêtement d'objets en résine acrylique, et objets ainsi revêtus.

(30) Priorité: **24.08.83 FR 8313659**

(43) Date de publication de la demande:
**13.03.85 Bulletin 85/11**

(45) Mention de la délivrance du brevet:
**13.01.88 Bulletin 88/2**

(84) Etats contractants désignés:
**DE GB IT**

(56) Documents cité:
**DE-A-2 827 332**
**GB-A-1 145 880**

(73) Titulaire: **Rambaud, Patrick, 60 rue de la Tourelle,
F-92100 Boulogne (FR)**

(72) Inventeur: **Rambaud, Jean- Michel, décedé (FR)**

(74) Mandataire: **Ramey, Daniel, Cabinet NETTER 40,
rue Vignon, F-75009 Paris (FR)**

## Description

L'invention concerne une composition et un procédé pour le revêtement d'objets à base de résine acrylique, notamment de polyméthacrylate de méthyle.

Les résines acryliques et notamment le polyméthacrylate de méthyle sont utilisés entre autres pour la fabrication d'équipements sanitaires, par exemple de baignoires. Il est souvent souhaitable de munir de tels objets de revêtements, par exemple à des fins de décoration, de protection ou de renforcement.

On a déjà essayé d'appliquer sur ces objets des revêtements formés au moins en partie de résine acrylique, qui devraient présenter une adhésion parfaite sur le substrat, en particulier lorsque celui-ci est à base de polyméthacrylate de méthyle. Les revêtements sont habituellement appliqués sous la forme d'une composition comprenant une résine acrylique dissoute dans un solvant chloré, avec éventuellement des additifs tels que des pigments et/ou des charges.

Cependant on n'a jamais pu obtenir une adhérence satisfaisante, le revêtement se séparant fréquemment du substrat par endroits, sous l'effet de chocs ou de cycles thermiques.

Un but de l'invention est de remédier à cet inconvénient.

Un autre but de l'invention est d'obtenir des objets du genre défini plus haut, par thermoformage après application du revêtement, ce qui n'a pas pu être réalisé jusqu'à présent en raison de l'adhérence insuffisante des revêtements.

La composition selon l'invention pour l'application de revêtement, comprenant du polyméthacrylate de méthyle dissous dans un solvant, est caractérisée en ce que ledit solvant est composé d'au moins d'une cétone choisie parmi la méthyléthylcétone et le diacétone-alcool et d'un hydrocarbure chloré choisi parmi le trichloréthylène et le chlorure de méthylène, le rapport du volume d'hydrocarbure chloré au volume de cétone étant au moins de 20 à 80.

La proportion de cétone peut être très faible, mais elle ne doit pas être entièrement supprimée car la dissolution du polyméthacrylate de méthyle deviendrait très difficile.

La dissolution est facilitée lorsque le rapport du volume d'hydrocarbure chloré au volume de cétone est au moins de 60 à 40, et de préférence d'environ 70 à 30.

Le solvant composé de diacétone-alcool et de chlorure de méthylène est particulièrement avantageux, car l'évaporation de l'hydrocarbure chloré est plus lente que dans les autres solvants, ce qui facilite beaucoup l'utilisation du produit et limite le risque d'arriver par évaporation à une formule de solvant extérieure au domaine spécifié, conduisant après application à une adhérence insuffisante du revêtement.

Le rapport du volume de polyméthacrylate de méthyle au volume de solvant détermine la viscosité de la composition et doit être choisi par l'homme de métier en fonction du mode d'application et de l'épaisseur du revêtement à obtenir. Un rapport compris entre 5 et 10 % convient en général.

Après sa préparation, un peut ajouter à la composition une quantité complémentaire d'hydrocarbure chloré, soit pour abaisser la viscosité de la composition, soit pour compenser l'évaporation de l'hydrocarbure chloré.

La composition selon l'invention peut comprendre en outre des additifs adaptés à l'utilisation envisagée, notamment des éléments décoratifs tels que des pigments et des particules métalliques, et des charges sous forme fibreuse, pulvérulente, granulaire ou autre.

On peut obtenir des objets à base de résine acrylique, notamment de polyméthacrylate de méthyle, munis d'un revêtement formé au moins en partie de polyméthacrylate de méthyle, en appliquant sur un substrat à base de résine acrylique une composition selon l'invention et en évaporant le solvant. L'évaporation peut se faire au choix à température ambiante ou à une température plus élevée.

Selon une caractéristique particulièrement avantageuse de l'invention, la composition est appliquée sur un substrat de forme plate et on thermoforme l'objet revêtu pour obtenir un produit final à la forme désirée, par exemple une baignoire munie d'un revêtement décoratif ou de renforcement.

Le thermoformage peut s'effectuer à une température de l'ordre de 170 à 180°C.

On peut appliquer la composition par les méthodes habituelles telles que projection, enduction et moulage, selon sa viscosité. Dans le cas de la projection, on peut projeter simultanément une composition non chargée et une charge de fibres de verre, pour obtenir un revêtement ou renforcement dans lequel les fibres sont noyées dans le polyméthacrylate.

## Exemple

On prépare un solvant en mélangeant 30 volumes de diacétone-alcool et 70 volumes de chlorure de méthylène. A ce solvant, on ajoute 5 volumes de polyméthacrylate de méthyle en poudre et on agite à température ambiante jusqu'à dissolution.

On incorpore à la solution obtenue un colorant liquide miscible à celle-ci.

La composition ainsi préparée a la consistance d'une huile très fluide.

On l'applique par projection au pistolet sur une plaque de polyméthacrylate de méthyle de dimensions 80 x 180 x 0,5 cm.

Après séchage pendant 24 heures à la température ambiante on obtient un revêtement de 0,1 à 0,2 mm d'épaisseur adhérant parfaitement à la plaque.

La plaque ainsi revêtue est thermoformée à 172°C pour donner une baignoire revêtue sur sa face intérieure d'un revêtement décoratif.

Aucun décollement n'est observé lorsqu'on fait tomber sur le revêtement une bille d'acier de 200 g d'une hauteur de 1 m.

L'invention comme revendiquée n'est pas limitée aux modes de réalisation décrits en détail.

## Revendications

1. Composition pour l'application de revêtements sur un substrat à base de résine acrylique, comprenant du polyméthacrylate de méthyle dissous dans un solvant, caractérisée en ce que ledit solvant est composé au moins d'une cétone choisie parmi la méthyléthylcétone et le diacétone-alcool et d'un hydrocarbure chloré choisi parmi le trichloréthylène et le chlorure de méthylène, le rapport du volume d'hydrocarbure chloré au volume de cétone étant au moins de 20 à 80.

2. Composition selon la revendication 1, caractérisée en ce que ledit rapport est au moins de 60 à 40.

3. Composition selon la revendication 2, caractérisée en ce que ledit rapport est d'environ 70 à 30.

4. Composition selon l'une des revendications précédentes, caractérisée en ce que ladite cétone et ledit hydrocarbure chloré sont respectivement le diacétone-alcool et le chlorure de méthylène.

5. Composition selon l'une des revendications précédentes, caractérisée en ce que le rapport du volume de polyméthacrylate de méthyle au volume de solvant est compris entre 5 % et 10 %.

6. Composition selon l'une des revendications précédentes, caractérisée en ce qu'elle comprend en outre un pigment et/ou une charge.

7. Procédé d'obtention d'un objet à base de résine acrylique muni d'un revêtement formé au moins en partie de polyméthacrylate de méthyle, caractérisé en ce qu'on applique sur un substrat à base de résine acrylique une composition selon l'une des revendications précédentes et qu'on évapore le solvant.

8. Procédé selon la revendication 7, caractérisé en ce que le substrat est plat lors de l'application et qu'on thermoforme ensuite l'objet revêtu.

9. Procédé selon l'une des revendications 7 et 8, caractérisé en ce que le substrat est à base de polyméthacrylate de méthyle.

10. Procédé selon l'une des revendications 7 à 9, caractérisé en ce qu'on applique la composition par projection.

11. Procédé selon la revendication 10, caractérisé en ce qu'on projette simultanément sur le substrat une composition non chargée et une charge de fibres de verre.

12. Procédé selon l'une des revendications 7 à 9, caractérisé en ce qu'on applique la composition par enduction.

13. Procédé selon l'une des revendications 7 à 9, caractérisé en ce qu'on applique la composition par moulase.

14. Objet à base de résine acrylique muni d'un revêtemenr formé au moins en partie de méthacrylate de méthyle, caractérisé en ce que ledit revêtement est réalisé par le procédé selon l'une des revendications 7 à 13.

## Patentansprüche

1. Zusammensetzung für das Aufbringen von Schichten auf ein Substrat auf Acrylharzbasis, die gelöst in einem Lösungsmittel Polymethylmethacrylat enthält, dadurch gekennzeichnet, daß das Lösungsmittel zusammengesetzt ist aus mindestens einem Keton, ausgewählt aus Methylethylketon und Diacetonalkohol und einem chlorierten Kohlenwasserstoff, ausgewählt aus Trichlorethylen und Methylenchlorid, wobei das Verhältnis vom Volumen des chlorierten Kohlenwasserstoffs zum Volumen des Ketons mindestens 20 zu 80 beträgt.

2. Zusammensetzung nach Anspruch 1, dadurch gekennzeichnet, daß das Verhältnis mindestens 60 zu 40 beträgt.

3. Zusammensetzung nach Anspruch 2, dadurch gekennzeichnet, daß das Verhältnis etwa 70 zu 30 beträgt.

4. Zusammensetzung nach einem der vorgenannten Ansprüche, dadurch gekennzeichnet, daß das Keton und der chlorierte Kohlenwasserstoff Diacetonalkohol und Methylenchlorid sind.

5. Zusammensetzung nach einem der vorgenannten Ansprüche, dadurch gekennzeichnet, daß das Verhältnis vom Volumen des Polymethylmethacrylats zum Volumen des Lösungsmittels zwischen 5 % und 10 % liegt.

6. Zusammensetzung nach einem der vorgenannten Ansprüche, dadurch gekennzeichnet, daß sie außerdem ein Pigment und/oder einen Füllstoff enthält.

7. Verfahren zur Erzielung eines Gegenstands auf Acrylharzbasis, der mit einer mindestens teilweise aus Polymethylmethacrylat gebildeten Beschichtung versehen ist, dadurch gekennzeichnet, daß auf ein Substrat auf Acrylharzbasis eine Zusammensetzung nach einem der vorgenannten Ansprüche aufgebracht wird und das Lösungsmittel verdampft wird.

8. Verfahren nach Anspruch 7, dadurch gekennzeichnet, daß das Substrat während der Beschichtung flach ist und danach der beschichtete Gegenstand warmverformt wird.

9. Verfahren nach Anspruch 7 oder 8, dadurch gekennzeichnet, daß der Gegenstand auf Polymethylmethacrylatbasis gebildet ist.

10. Verfahren nach einem der Ansprüche 7 bis 9, dadurch gekennzeichnet, daß die Beschichtung durch Spritzen aufgebracht wird.

11. Verfahren nach Anspruch 10, dadurch gekennzeichnet, daß auf den Gegenstand gleichzeitig eine Zusammensetzung ohne Füllstoff und eine Glasfaserfüllung aufgebracht werden.

12. Verfahren nach einem der Ansprüche 7 bis 9, dadurch gekennzeichnet, daß die Zusammensetzung durch Auftragen aufgebracht wird.

13. Verfahren nach einem der Ansprüche 7 bis 9, dadurch gekennzeichnet, daß die Zusammensetzung durch Gießen aufgebracht wird.

14. Gegenstand auf Acrylharzbasis, der mit einer Beschichtung versehen ist, die wenigstens teilweise aus Methylmethacrylat besteht, dadurch gekennzeichnet, daß die Beschichtung entsprechend einem der Ansprüche 7 bis 13 durchgeführt ist.


## Claims

1. Composition for coating substrates which are composed essentially of acrylic resin, this composition containing polymethyl methacrylate that has been dissolved in a solvent, characterized in that the said solvent is composed of at least one ketone, selected from the group comprising methyl ethyl ketone and diacetone alcohol, and of a chlorinated hydrocarbon selected from the group comprising trichloroethylene and methylene dichloride, the volumes of chlorinated hydrocarbon and ketone being in a ratio of at least 20 to 80.

2. Composition according to Claim 1, characterized in that the said ratio is at least 60 to 40.

3. Composition according to Claim 2, characterized in that the said ratio is approximately 70 to 30.

4. Composition according to any one of the preceding Claims, characterized in that the said ketone and the said chlorinated hydrocarbon are, respectively, diacetone alcohol and methylene dichloride.

5. Composition according to any one of the preceding Claims, characterized in that the ratio of the volume of polymethyl methacrylate to the volume of solvent corresponds to between 5 and 10 %.

6. Composition according to any one of the preceding Claims, characterized in that it additionally contains a pigment and/or a filler.

7. Process for producing an article which is composed essentially of acrylic resin, and which is furnished with a coating that is composed, at least in part, of polymethyl methacrylate, characterized in that a composition according to any one of the preceding Claims is applied to a substrate which is composed essentially of acrylic resin, and in that the solvent is evaporated.

8. Process according to Claim 7, characterized in that the substrate is flat when the composition is applied, and in that the coated article is then produced by thermoforming.

9. Process according to either Claim 7 or 8, characterized in that the substrate is composed essentially of polymethyl methacrylate.

10. Process according to any one of Claims 7 to 9, characterized in that the composition is applied by spraying.

11. Process according to Claim 10, characterized in that a filler-free composition is sprayed onto the substrate at the same time as a glass-fibre filler.

12. Process according to any one of Claims 7 to 9, characterized in that the composition is applied by coating.

13. Process according to any one of Claims 7 to 9, characterized in that the composition is applied by moulding.

14. Article which is composed essentially of acrylic resin, and which has been furnished with a coating that is composed, at least in part, of polymethyl methacrylate, characterized in that the said coating is produced by means of the process according to any one of Claims 7 to 13.